# EUROPEAN PATENT APPLICATION

(11) **EP 3 498 991 A1**
(43) Date of publication of application: **19.06.2019**
(21) Application number: 18211236.7
(22) Date of filing: 10.12.2018
(51) Int. Cl.: F01M 1/08, F01P 3/08, F16K 15/04

(54) **TWO-PIECE TYPE OIL JET ASSEMBLY AND METHOD OF MANUFACTURING THE SAME**

(30) Priority: 12.12.2017 KR 20170170462
(71) Applicant: Dongbo Ind. Co., Ltd., Incheon 21633 (KR)
(72) Inventor: PARK, Seewoo, 21350 Incheon (KR); SHIM, Kyungmyung, 10448 Goyang-si, Gyeonggi-do (KR); JO, Huidong, 15500 Ansan-si, Gyeonggi-do (KR); KIM, Jaekyung, 06714 Seoul (KR); KIM, Jiman, 06280 Seoul (KR)
(74) Representative: Zardi, Marco

(57) **Abstract**

There is provided a two-piece type oil jet assembly manufactured in such a manner that a nozzle part and a valve part are separated from each other, the nozzle part is changed in accordance with the type of vehicle, the valve part is standardized, and the nozzle and valve parts are combined with each other, thereby providing the effects of reducing manufacturing cost, simplifying a manufacturing process, and ensuring competitiveness in markets.

## Description

### CROSS-REFERENCE TO RELATED APPLICATION

This application claims the benefit of Korean Patent Application No. 10-2017-0170462 filed on December 12, 2017, which is hereby incorporated by reference herein in its entirety.

### BACKGROUND

### 1. Technical Field

The present invention relates to an oil jet assembly. The oil jet assembly according to the present invention has an improved structure in which a valve part and a nozzle part are combined together in a two-piece form.

### 2. Description of the Related Art

Pistons used in gasoline engines, diesel engines, and high-performance engines are easily overheated during operation. In such a reciprocating engine, a pressure-driven oil jet is used to cool the lower portion of a piston. Such an oil jet is usually mounted on a bore below an engine block, and receives pressurized oil from an oil gallery. The oil jet also has a check valve, and discharges the oil through a tube when a certain pressure is reached.

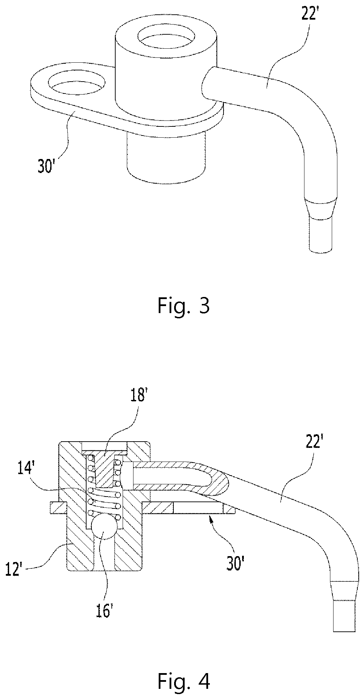

The oil jet shown in FIGS. 3 and 4 is manufactured in a one-piece form by a cutting process in an integrated manner. A fluid passage is disposed inside a cylindrical valve housing 12,' an inlet is sealed with a ball 16,' and a spring 14' is interposed between the ball 16' and a pin 18' configured to seal the upper part of the passage. An outlet communicates with a tube 22,' and a fastening ring 30' configured to be fastened to an external component is coupled to the outer circumference of the middle portion of a body 12.' However, the one-piece type oil jet is manufactured by a cutting process, so that the manufacturing cost thereof is high and it is burdensome that the overall one-piece type oil jet must be re-manufactured in accordance with the type of vehicle when the type of vehicle is changed.

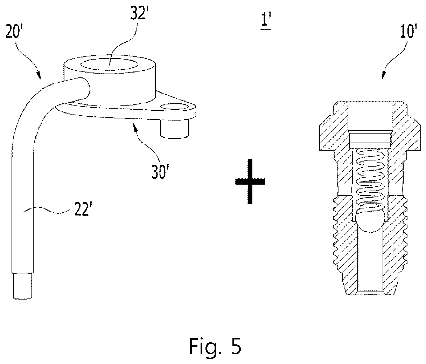

The oil jet 1' shown in FIG. 5 is manufactured in a two-piece form by a cutting process, and includes a valve part 10' disposed on a right side and a cylindrical nozzle part 20' disposed on a left side. The valve part 10' is similar to that of FIG. 4. The nozzle part 20' is fabricated by assembling a coupling ring 30' and a tube 22' together, and the threaded portion of the valve part 10' is engaged with the threaded portion of the inside surface 32' of the nozzle part 20.' However, the two-piece type oil jet 1' is also manufactured by a cutting process, so that the manufacturing cost thereof is high and it is burdensome that the overall value part 10' must be redesigned and re-manufactured in accordance with the type of vehicle when the type of vehicle is changed.

Meanwhile, as to patent documents regarding oil jets, Korean Patent Application Publication No. 10-2009-0043273 discloses a method of press-inserting a check valve into an oil inflow passage formed in an oil gallery, and Korean Patent Application Publication No. 10-2002-0019268 discloses a stopper for blocking the forward movement of a spring on the inner surface of a valve housing. However, these patents are intended to secure a smooth flow path for fluid, and do not address an overall method of manufacturing an oil jet and corresponding structural improvement.

### SUMMARY

The present invention has been conceived to overcome the above-described problems, and an object of the present invention is to provide a manufacturing method in which a valve part and a nozzle part are separated from each other in the structure of an oil jet for a vehicle, the valve part is configured to be standardized, and the pressure of a spring can be accurately controlled.

In order to accomplish the above object, the present invention provides an oil jet assembly for injecting oil, introduced from an oil gallery of an engine block for a vehicle, to a piston, the oil jet assembly including: a nozzle part configured to function as a first piece, and adapted to include a head that has a cap and hollow cylindrical shape and that is configured such that the top surface thereof is closed, the bottom surface thereof is open, and a side surface thereof communicates with a tube for injecting oil; and a valve part configured to function as a second piece, and adapted such that the body thereof is formed using a retainer configured to be inserted into the open bottom surface of the head of the nozzle part, to have a hollow cylindrical shape, and to have open top and bottom surfaces, a spring is mounted inside the retainer, and a ball is inserted below the spring; wherein the nozzle part and the valve part are combined with each other.

The head and the retainer may be manufactured using a thin pipe made of steel material.

A bend bent inward may be formed along the periphery of the top surface of the retainer, a bend bent inward may be formed along the periphery of the bottom surface of the retainer, the bottom surface of the retainer may be open and form an entrance, and the inner surface of the bend of the bottom surface may provide a valve seat that comes into contact with the ball.

The retainer may be inserted into the head so that the top surface of the retainer is placed at a location adjacent to the bottom of the tube, and a predetermined portion of the retainer may extend below the bottom surface of the head and be exposed to the outside.

Furthermore, the present invention provides a method of manufacturing the two-piece type oil jet assembly, wherein the elastic modulus, pitch and number of turns of the spring are adjusted by means of an auto coiler so that the spring can accommodate valve opening pressure varying depending the type of vehicle, and the ball is inserted.

The bend of the bottom surface of the retainer may be formed by a rolling process, and the ball may be seated on the bend.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a sectional view showing an oil jet assembly according to an embodiment of the present invention with a nozzle part and a valve part separated from each other;
FIG. 2 is a sectional view of the oil jet assembly according to the embodiment of the present invention with the nozzle part and the valve part combined with each other;
FIG. 3 is a perspective view of an one-piece type oil jet according to an example of the prior art;
FIG. 4 is a partially sectional view of the one-piece type oil jet according to the example of the prior art; and
FIG. 5 is a view of a two-piece type oil jet according to another example of the prior art.

### DETAILED DESCRIPTION

Some embodiments of the present invention will be described in detail below with reference to the exemplary drawings. It should be noted that the same reference symbols are assigned to the same components as much as possible even when they are shown in different drawings. In the following description of the embodiments, when it is determined that a detailed description of a related well-known function or configuration may make the gist of the present invention obscure, it will be omitted.

In the description of the components of each embodiment of the present invention, the terms "first," "second," "A," "B," "a," "b," etc. may be used. These terms are each used merely to distinguish a corresponding component from another component, but are not used to limit the natures or sequential positions of corresponding components. In some portion of the specification, when any component is described as "including" or "having" another component, this is not intended to exclude a third component, but is intended to include a third component, unless particularly described to the contrary. Furthermore, throughout the specification, when any component is described as being "connected," "installed," or "attached" to another component, it should be interpreted in a broad sense in such a manner that it is interpreted as including a case where the former component is directly connected, installed, or attached to the latter component and a case where the former component is connected, installed, or attached" to the latter component indirectly or via a third component.

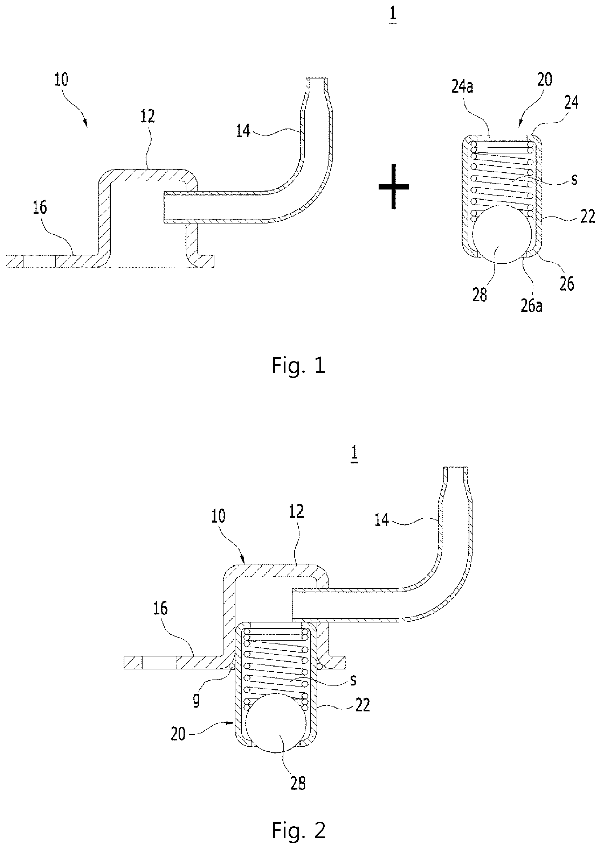

FIG. 1 is a sectional view showing an oil jet assembly 1 according to an embodiment of the present invention with a nozzle part 10 and a valve part 20 separated from each other.

The head 12 of the nozzle part 10 has a cap and hollow cylindrical shape. The head 12 is configured such that the top surface thereof is closed, the bottom surface thereof is opened to accommodate the valve part 20, and a side surface thereof communicates with a tube 14 and provides a fluid outlet. A fastening ring 16 is formed on the bottom surface of the head 12 in an integrated manner. The head 12 and the fastening ring 16 are fabricated using a thin pipe made of steel material. The nozzle part 10 is completed by fastening the tube 14 to the head 12, for example, by performing drawing or welding after rolling molding. Alternatively, the head 12 and the fastening ring 16 may be fabricated by means of a forming process. In the present invention, the head 12 constituting the body of the nozzle part 10 is fabricated using a thin steel plate, which is advantageous for the lightening of weight.

The size and shape of the nozzle part 10 are shown as an example, and may vary depending on the type of vehicle.

Next, the valve part 20 has a hollow cylindrical shape. The valve part 20 is configured such that the body thereof is formed using a retainer 22 having open top and bottom surfaces and a spring S is mounted inside the retainer 22. A ball 28 is inserted under the spring S. A bend 24 bent inward is formed along the periphery of the top surface of the retainer 22, and the top surface of the retainer 22 is open and forms an exit 24a. A bend 26 bent inward is formed along the periphery of the bottom surface of the retainer 22, and the bottom surface of the retainer 22 is open and forms an entrance 26a. The inner surface of the bend 26 provides a valve seat, and the ball 28 is pressed by the pressing force of the spring S and comes into contact with the valve seat. In FIG. 1, the entrance 26a of the valve part 20 is sealed.

The retainer 22 is fabricated using a thin pipe made of steel material. Furthermore, the valve part 20 is completed by inserting the ball 28 into the spring S and mounting the ball 28 and the spring S inside the retainer 22, and thus design is simplified and fabrication is facilitated. When the valve part 20 is fabricated, the elastic modulus, pitch and number of turns of the spring S are adjusted, for example, by means of an auto coiler so that the spring S can accommodate valve opening pressure slightly varying depending on the type of vehicle, the ball 28 is inserted, the bend 26 is formed by means of a rolling process, and the ball 28 is seated on the bend 26.

FIG. 2 is a sectional view of the oil jet assembly 1 according to the embodiment of the present invention with the nozzle part 10 and the valve part 20 combined with each other.

The valve part 20 is inserted into the nozzle part 10 so that the exit 24a of the retainer 22 is placed at a location adjacent to the bottom of the tube 14. In this case, the valve part 20 and the nozzle part 10 are sealed together in such a manner that the outer circumference of the retainer 22 comes into contact with the inside of the lower portion of the head 12. In order to secure the sealing, a gasket may be further installed. The portion of the retainer 22 up to height H is mounted in the bore of a block. An accommodation cup (not shown) configured to accommodate the retainer may be installed in the bore. Alternatively, the height of the head 12 may extend, and the bottom surface of the head 12 may be configured to extend below the ball 28.

In the oil jet assembly 1 according to the present invention, the head 12 and the retainer 22 are fabricated using a thin pipe made of steel material, so that the thick wall of the conventional valve housing is removed and the oil jet assembly 1 can be simply assembled using two-piece parts, thereby enabling manufacturing cost to be reduced and also enabling a surrounding space to be decreased due to the compact volume of the oil jet assembly 1.

Furthermore, complete products can be efficiently fabricated by standardizing a valve part in accordance with pressure and designing, fabricating a nozzle part in accordance with the type of vehicle, and then combining the valve and nozzle parts.

According to the present invention, the nozzle part and the valve part are fabricated using a thin steel plate material, and thus a lightweight product can be implemented.

Furthermore, the valve part is formed to fasten the spring and the ball by using a pipe-shaped material, and thus the manufacture thereof can be facilitated and a simple shape can be achieved. In particular, there can be applied a manufacturing technique for fastening the ball by means of a rolling process while measuring spring force so that the spring force is set within the range of management specifications.

Moreover, the valve part can be standardized and fabricated in accordance with pressure, the nozzle part can be designed and fabricated in accordance with the type of vehicle, and then the valve part and the nozzle part can be combined, thereby enabling a complete product to be efficiently manufactured.

While the embodiment of the present invention has been described as an example, this does not limit the scope of the present invention. Various alterations or modifications may be made to the present invention, and also fall within the scope of the present invention. The scope of the present invention extends to a range identical or equivalent to the attached claims.

## Claims

1. An oil jet assembly for injecting oil, introduced from an oil gallery of an engine block for a vehicle, to a piston, the oil jet assembly comprising:
a nozzle part configured to function as a first piece, and adapted to include a head that has a cap and hollow cylindrical shape and that is configured such that a top surface thereof is closed, a bottom surface thereof is open, and a side surface thereof communicates with a tube for injecting oil; and
a valve part configured to function as a second piece, and adapted such that a body thereof is formed using a retainer configured to be inserted into the open bottom surface of the head of the nozzle part, to have a hollow cylindrical shape, and to have open top and bottom surfaces, a spring is mounted inside the retainer, and a ball is inserted below the spring;
wherein the nozzle part and the valve part are combined with each other.

2. The oil jet assembly of claim 1, wherein the head and the retainer are manufactured using a thin pipe made of steel material.

3. The oil jet assembly of claim 2, wherein a bend bent inward is formed along a periphery of a top surface of the retainer, a bend bent inward is formed along a periphery of a bottom surface of the retainer, the bottom surface of the retainer is open and forms an entrance, and an inner surface of the bend of the bottom surface provides a valve seat that comes into contact with the ball.

4. The oil jet assembly of claim 3, wherein the retainer is inserted into the head so that a top surface of the retainer is placed at a location adjacent to a bottom of the tube, and a predetermined portion of the retainer extends below a bottom surface of the head and is exposed to an outside.

5. A method of manufacturing the two-piece type oil jet assembly of claim 1, wherein elastic modulus, pitch and a number of turns of the spring are adjusted by means of an auto coiler so that the spring can accommodate valve opening pressure varying depending a type of vehicle, and the ball is inserted.

6. The method of claim 5, wherein the bend of the bottom surface of the retainer is formed by a rolling process, and the ball is seated on the bend.
